# EUROPEAN PATENT APPLICATION

(11) **EP 1 424 612 A2**
(43) Date of publication of application: **02.06.2004**
(21) Application number: 03026969.0
(22) Date of filing: 25.11.2003
(51) Int. Cl.: G04G 3/02

(54) **Apparatus and method for adjusting time in a terminal with built-in analog watch**

(30) Priority: 26.11.2002 KR 2002073882
(71) Applicant: SAMSUNG ELECTRONICS CO., LTD., Suwon-City, Kyungki-do (KR)
(72) Inventor: Park, Jae-Sun, Paldal-gu, Suwon City, Kyungki-do (KR)
(74) Representative: Grünecker, Kinkeldey, Stockmair & Schwanhäusser Anwaltssozietät

(57) **Abstract**

There is provided an apparatus for adjusting the time of analog watch in a terminal having the analog watch, which comprises an analog watch unit and a control unit. The analog watch unit includes an oscillation circuit for generating a standard signal with a predetermined frequency; a division circuit for dividing the standard signal by a predetermined division ratio according to a control signal and generating a divided signal; a driving circuit for generating a driving signal according to the divided signal; and a driving unit driven by the driving signal, for moving the elements of the analog watch. The control unit provides the control signal to the division circuit of the analog watch when a predetermined time adjustment manipulation is inputted. The hands of the analog watch move faster than a general time indication according to an input state of a time adjustment key.

## Description

The present invention relates to an apparatus and method for adjusting time in a terminal with a built-in analog watch, in which the terminal may be one of a wire/wireless communication terminal, a notebook computer, a PDA, etc.

Recently, communication terminals (e.g., a cellular phone) for various voice/data communications and mobile data terminals (or a composite terminal of a communication terminal and a data terminal) such as a notebook computer are advanced and diversified. In addition, the terminals are increasingly miniaturized for the sake of portability and convenience of use.

Generally, these terminals have a watch function and structure for informing users of time information. For example, in a turned-on state, code division multiple access (CDMA) mobile communication terminals receive information on the current time from base stations. Then, using the received information, the CDMA communication terminals basically provide services of displaying current time via liquid crystal displays (LCDs). In addition, in terminals that use the European global system for mobile telecommunication (GSM), time information is set by the users. Then, using the time information, the European GSM communication terminals basically provide services of displaying current time calculated by themselves on one side of LCD monitor.

Like this, time information services provided from the terminals are achieved by displaying current time on LCD in numeral form or watch-shaped icon and they can be considered to employ function and structure of a general digital watch.

Meanwhile, there are recently increasing demands to provide the time information services not in digital watch form but in general analog watch form. The number of users who have a preference for beautiful design of the analog watch increases. Particularly, in case where the analog watch is employed as part of the terminals (e.g., the mobile communication terminals) receiving the time information from the base station, there is an advantage that corresponding terminals can provide the time information services even out of the communication's area.

Meanwhile, the analog watch typically needs a stem structure for adjusting time, which is outwardly protruded. The user adjusts the time of the analog watch by turning the stem. This stem is connected to a watch element unit for moving the hands of the watch, and the watch element unit is artificially rotated according to the rotation of the stem when adjusting time to thereby move the hands of the watch.

Accordingly, in the case where the analog watch is installed in the mobile communication terminals, since the terminals must have the protruded structure on one side, the outer appearance thereof is inelegant and the protruded stem portion is subject to impact. In addition, when adjusting time, the user must manually turn the stem, and thus, it is more inconvenient compared with the conventional terminals employing a digital watch form.

Accordingly, the present invention is directed to an apparatus and method for adjusting time in a terminal with built-in analog watch.

It is the object of the present invention to provide an apparatus and method for adjusting time in a terminal with built-in analog watch, of which an outer appearance is elegant.

This object is solved by the subject matters of the independent claims.

Preferred embodiments are defined in the dependent claims.

An aspect of the present invention is to provide an apparatus and method for adjusting time in a terminal with a built-in analog watch, capable of providing a more convenient time adjustment.

Another aspect of the present invention is to provide an apparatus and method for adjusting the time in a terminal with a built-in analog watch, in which it is unnecessary to have a stem structure for adjusting the time of the analog watch.

In an embodiment of the present invention, there is provided an apparatus for adjusting time in a terminal having an analog watch, which comprises (a) an analog watch unit including an oscillation circuit for generating a standard signal with a predetermined frequency; a division circuit for dividing the standard signal by a predetermined division ratio according to a control signal and generating a divided signal; a driving circuit for generating a driving signal according to the divided signal; and a driving unit, preferably a step motor, driven by the driving signal, for moving the elements of the analog watch; and (b) a terminal control unit for providing the control signal to the division circuit of the analog watch when a predetermined time adjustment manipulation is inputted.

In another embodiment of the present invention, there is provided a method for adjusting time in a terminal having an analog watch, which comprises the steps of checking an input state of a predetermined time adjustment key in a time adjustment mode; and moving the hands of the analog watch faster than a general time indication by one unit or continuously according to the input state of the time adjustment key. The input state is a state related to how many times the time adjustment key is pressed and/or the how long the press lasts.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile communication terminal having an analog watch in accordance with a first embodiment of the present invention;
FIG. 2 is a block diagram of a mobile communication terminal having an analog watch in accordance with a second embodiment of the present invention;
FIG. 3 is a flowchart showing the operation of terminal for a time adjustment of the analog watch in accordance with a first embodiment of the present invention; and
FIG. 4 is a flowchart showing the operation of terminal for a time adjustment of the analog watch in accordance with a second embodiment of the present invention.

Reference will now be made in detail to the preferred embodiments of the present invention, examples of which are illustrated in the accompanying drawings. Well known structures and functions have been excluded when they would obscure the elements of the present invention.

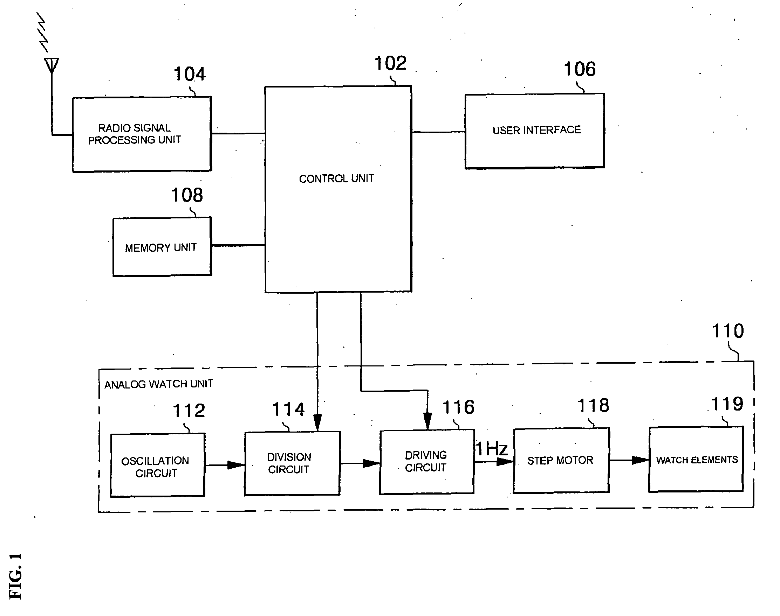

FIG. 1 is a block diagram of a mobile communication terminal with having an analog watch in accordance with a first embodiment of the present invention. Referring to FIG. 1, the mobile communication terminal of the present invention includes a mobile communication part and an outer part of a terminal body. The mobile communication part performs a mobile communication function and the outer part has a built-in analog watch unit 110 installed on one side of a folder's outer face.

The mobile communication part comprises a control unit 102 for managing the general operation of the mobile communication terminal and performing a time adjusting function in accordance with the present invention. Also included is a radio signal processing unit 104 for managing a transmission/reception signal processing function so as to wirelessly communicate with a base station, a user interface 106 for interfacing with a user, and a memory unit 108 for permanently or temporarily storing data required for an operating program of the control unit 102 and an operation execution. The user interface 106 can include a microphone for receiving voice signals from a user, a speaker for outputting audible signals, a keypad for receiving various keypad manipulations from a user, and an LCD display.

The control unit 102 reads an operating program from the memory unit 108 and performs the functions programmed in the operating program. In addition, the control unit 102 receives user commands and data inputs from the keypad of the user interface 106, and transmits a current state of the mobile communication terminal and a user menu to the LCD. The transmitted current state and user menu are displayed via the LCD. Further, the control unit 102 modulates voice signals inputted via the microphone of the user interface 106 and transmits the modulated voice signals to the radio signal processing unit 104. The control unit 102 demodulates the signals received from the radio signal processing unit 104 and outputs the demodulated signals via the speaker of the user interface 106.

The memory unit 108 stores the operating program for adjusting the time of the analog watch unit 110 and related data, in accordance with the present invention. The control unit 102 performs an operation for adjusting the time of the analog watch unit 110 according to the operating program stored in the memory unit 108.

The analog watch unit 110 comprises an oscillation circuit 112 for generating a standard signal of a predetermined frequency using a quartz vibrator a division circuit 114 for properly dividing the standard signal generated from the oscillation circuit 112 to generate a signal of the frequency required for the circuit operation a driving circuit 116 for driving a step motor 118 according to the divided signal outputted from the division circuit 114 the step motor 118 driven by the driving circuit 116 and a watch element unit 119 having the second/minute/hour hands of the watch and various gears so as to indicate time according to an operation of the step motor 118.

Generally, the oscillation circuit 112 generates the standard signal of 32.768 KHz, and the division circuit 114 divides the standard signal outputted from the oscillation circuit 112 and provides the divided signal to the driving circuit 116. The driving circuit 116 outputs a frequency so as to allow the step motor 118 to be driven in accordance with 1 Hz. At this time, there are proposed various methods for minimizing current consumption while the step motor 118 operates according to the frequency and waveform outputted from the driving circuit 116. The details thereof will be omitted since it is not related to the present invention. The step motor 118 rotates one step per one clock of the driving signal. Thus, the step motor 118 rotates one step for one second in response to the driving signal of 1 Hz. These operations of the step motor 118 make the watch element unit 119 operate so that the second/minute/hour hands of the watch are moved.

In the mobile communication terminal having the analog watch unit 110 configured as above, the control unit 102 controls the operation of the division circuit 114 of the analog watch unit 110 to adjust the time of the analog watch unit 110. For example, if the frequency of an output signal of the division circuit 114 is greater than that in a normal operation, i.e., if the frequency of an output signal of the division circuit 114 is 1 Hz, the control unit 102 can control the division ratio of the division circuit 114 to output a frequency (e.g., 10 Hz to several KHz) higher than 1 Hz. Thus, the step motor 118 operates ten times or hundreds times faster than the case of general driving signal of 1 Hz. In other words, in the case where the analog watch unit 110 performs a general operation of time indication, if the frequency of the output signal of the division circuit 114 is 1 Hz, the control unit 102 allows the frequency of the output signal of the division circuit 114 to be 1 Hz or more when adjusting time. Thus, the step motor 118 operates faster than a normal state, and thus time can be adjusted by fast moving the hands of the watch element unit 119 until they reach desired time.

The mobile communication terminal with built-in analog watch in accordance with the present invention can have the above-described structure of FIG. 1. In addition, it is possible to provide the driving signal of the step motor 118 outside of the analog watch unit 110. This is because one-chip part in which the oscillation circuit 112, the division circuit 114 and the driving circuit 116 are integrated, is widely used. Accordingly, in order to reduce a configuration cost, there may be required a structure that outputs a time-adjustment driving signal to the step motor 118 while using the one-chip part.

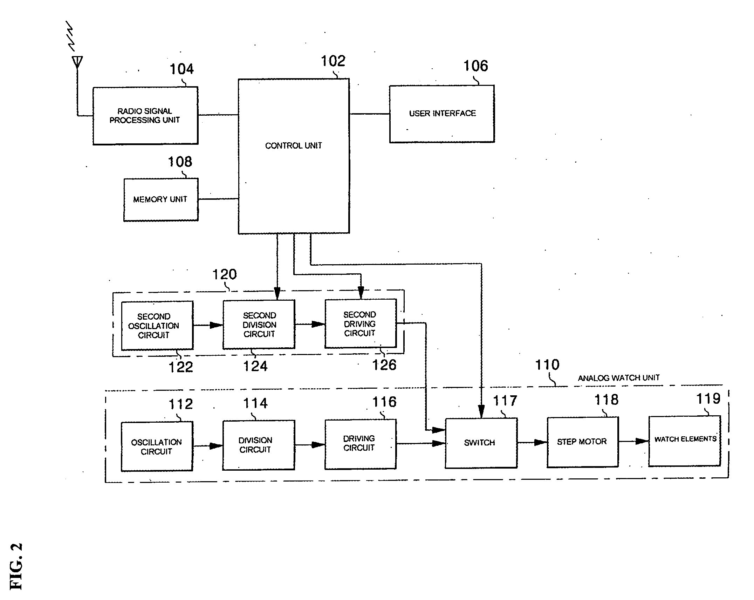

FIG. 2 is a block diagram of a mobile communication terminal with built-in analog watch in accordance with a second embodiment of the present invention. Referring to FIG. 2, like FIG. 1, the mobile communication terminal includes a mobile communication part for performing a mobile communication function and an analog watch unit 110. Also, the mobile communication terminal may further include a time-adjustment driving signal generation unit 120 for providing a time-adjustment driving signal to the analog watch unit 110 under the control of the control unit 102. Like FIG. 1, the mobile communication part includes a control unit 102, a radio signal processing unit 104, a user interface 106 and a memory unit 108. Similarly, the analog watch unit 110 comprises an oscillation circuit 112, a division circuit 114, a driving circuit 116, a step motor 118 and a watch element unit 119. The analog watch unit 110 has a structure that a driving signal outputted from the driving circuit 116 is provided to the step motor 118 via a switch 117. The switch 117 selectively switches and outputs a driving signal of 10 Hz to several KHz or a driving signal of 1 Hz under the control of the control unit 102. The driving signal of 10 Hz to several KHz is outputted from the time-adjustment driving signal generation unit 120 outside of the analog watch unit 110, and the driving signal of 1 Hz is outputted from the driving circuit 116 inside of the analog watch unit 110.

The time-adjustment driving signal generation unit 120 comprises a second oscillation circuit 122, a second division circuit 124 and a second driving circuit 126. These units 122, 124 and 126 may have the same structure and operation as the oscillation circuit 112, the division circuit 114 and the driving circuit 116 of the analog watch unit 110, respectively. In addition, the second oscillation circuit 122 can be configured using a quartz vibrator that provides the operating frequency of the terminal itself The second division circuit 124 and the second driving circuit 126 can be also configured properly according to the oscillation circuit 122.

In the mobile communication terminal with the analog watch unit 110 configured as shown in FIG. 2, the control unit 102 adjusts the time of the analog watch unit 110 by controlling the operation of the second division circuit 124 of the time-adjustment driving signal generation unit 120 and the switch 117 of the analog watch unit 110.

For example, the control unit 102 can control the second division circuit 124 to output a signal having a frequency of 10 Hz to several KHz, higher than 1 Hz. In addition, the control unit 102 controls an operation of the switch 117 so that the driving signal outputted from the time-adjustment driving signal generation unit 120 can be provided to the step motor 118 via the switch 117. In other words, in case where the analog watch unit 110 performs a general operation of time indication, the control unit 102 allows the driving signal having a frequency of 1 Hz, outputted from the driving circuit 116 of the analog watch unit 110, to be provided to the step motor 118. When adjusting time, the control unit 102 allows the driving signal of 10 Hz to several KHz, outputted from the time-adjustment driving signal generation unit 120, to be provided to the step motor 118, so that the step motor operates faster than a normal state. Thus, time can be adjusted by fast moving the hands of the watch until they reach positions corresponding to desired time of the.watch element unit 119.

Hereinafter, a time adjusting operation in the mobile communication terminal with the analog watch unit 110 as shown in FIGs. 1 and 2 will be described in detail with reference to attached drawings.

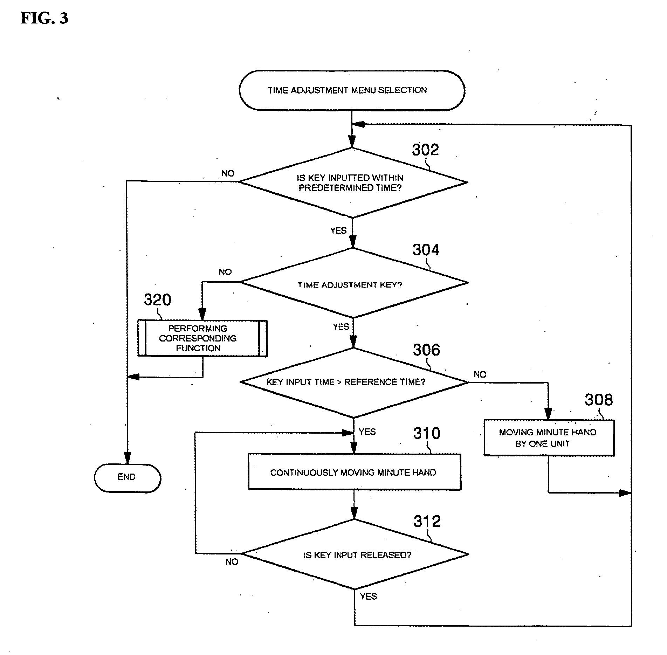

FIG. 3 is a flowchart of the operation of a terminal, e.g., the mobile communication terminal, for adjusting the time of the analog watch in accordance with a first embodiment of the present invention. Referring to FIG. 3, the mobile communication terminal has in advance a time adjustment menu of the present invention in various operation setup menus, and a user can select the time adjustment menu using the keypad and LCD, which are installed in the user interface 106. If the user selects the time adjustment menu, the control unit 102 of the mobile communication terminal operates in a time adjustment mode. In step 302, the control unit 102 checks whether or not a key is inputted within a predetermined time. If the key is inputted, the process proceeds to step 304. In step 304, it is determined whether or not the inputted key is a key that is previously set for the time adjustment. A volume adjustment key, a navigation key or a key provided in the keypad and side can be set as the time adjustment key. Meanwhile, it is possible to configure the time adjustment operation mode to be changed into an immediate execution mode by a hot key. If the inputted key is not the time adjustment key, it proceeds to step 320 so that the function corresponding to the inputted key is performed. If the inputted key is the time adjustment key, it proceeds to step 306.

In step 306, it is determined whether or not the duration time of the key input is greater than a predetermined time. If the duration time is greater than the predetermined time, the process proceeds to step 310. If the duration time is not greater than the predetermined time, thr process proceeds to step 308. In step 308, the minute hand of the watch element unit 119 contained in the analog watch unit 110 is controlled to move by one unit. These operations are made by controlling a division ratio of the division circuit 114 (in case of FIG. 2, the second division circuit 120) so that the driving signal of the time adjustment frequency, which is previously set and higher than 1 Hz, can be provided to the step motor 118 in FIG. 1, and thus properly controlling the operation of the driving circuit 116 (in case of FIG. 2, the second driving circuit 126). Of course, in case of FIG. 2, the operation of the switch 117 must be also controlled. For example, if the driving signal of 1 Hz is provided to the step motor 118 in the general time indication, the operations of the division circuit 114 and the driving circuit 116 can be controlled so that the driving signal of 120 Hz can be provided for 1/2 second so as to fast move the minute hand by one unit (e.g., one minute unit). After moving the minute hand by one unit in step 308, the process returns to step 302 so that steps 302, 304 and 306 are repeatedly performed. On the whole, a series of the operations in steps 302, 304 and 306 cause the minute hand to move by one unit according to the number of the user's short input of the time adjustment key in the mode of the time adjustment menu.

Meanwhile, in step 310 performed when the duration time of the time adjustment key input is greater than the predetermined reference time, an operation of moving the minute hand fast and continuously is performed. This operation is performed until the time adjustment key input is released. In step 312, it is checked whether or not the time adjustment key input is released. Then, the process proceeds to step 302 so that the above procedures can be repeatedly performed. The operations of steps 310 and 312 cause the minute hand to move fast when the user continuously presses the time adjustment key. At this time, the frequency of the driving signal provided to the step motor 118 may be, e.g., 120 Hz. However, it is desirable that the frequency is high, but within a proper range so as not to cause damage to the operations of the step motor 118 and the watch element unit 119, and within a proper range in which the user can respond to the moving speed of the minute hand.

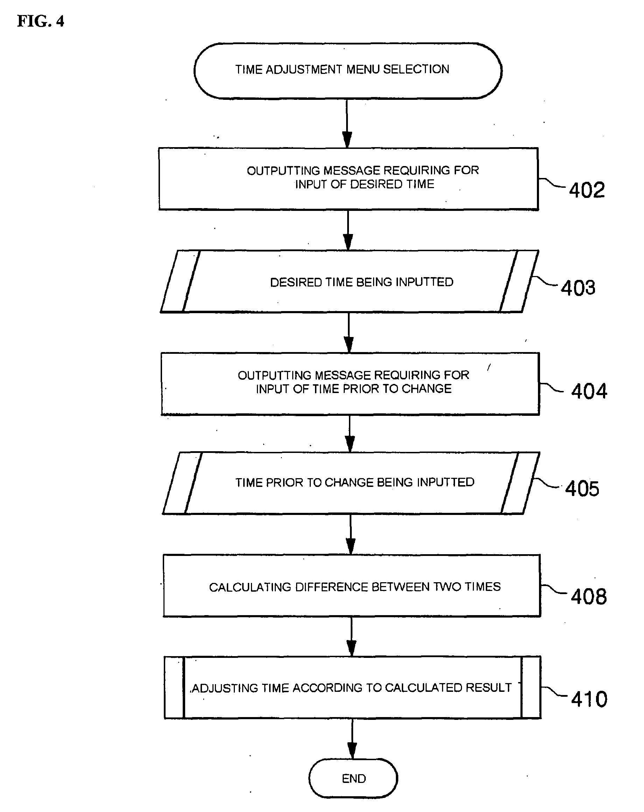

In the mobile communication terminal of the present invention, the time adjustment operation of the analog watch can be achieved through the operations shown in FIG. 3. Further, a time adjustment operation of the analog watch in accordance with another embodiment of the present invention can be also achieved. For example, the current time indicated by the analog watch can be received from the user or the desired time can be received after an initialization of the analog watch. The time adjustment can be achieved by calculating a time difference between the current time indicated by the analog watch and the desired time and by controlling the operations of the division circuit 114 and the driving circuit 116 to provide the required number of clocks to the step motor 118. Hereinafter, these operations will be described in detail with reference to FIG. 4.

FIG. 4 is a flowchart showing the operation of terminal for a time adjustment of the analog watch in accordance with a second embodiment of the present invention. Referring to FIG. 4, in step 402, if the user selects the time adjustment menu in the operation setup menu of the mobile communication terminal, the control unit 102 of the mobile communication terminal outputs a message guiding an input of the time, which is desired by the user, via the LCD. Then, in step 403, the desired time is inputted from the user. The user can input the desired time using the numeric keys of keypad in the user interface 106. In step 404, a message guiding an input of the time prior to change displayed on the analog watch is outputted. In step 405, the time indicated by the watch is inputted by the user. In step 408, a time difference between the desired time as inputted and the time prior to change is calculated, and the number of clocks of the time adjustment driving signals to be provided to the step motor 118 is checked. For example, it is assumed that the desired time is 02:00, the time prior to change is 12:00 and the driving signal of 1 Hz is provided to the step motor 118 in the general time indication. In that case, the time difference is 2 hours, i.e., 7200 clocks. Accordingly, in order to provide 7200 clocks to the step motor 118, when the driving signal of 120 Hz is provided to the step motor 118 in the time adjustment of the present invention, the driving signal of 120 Hz must be provided for 60 seconds. After calculating the time difference in step 408, in step 410, the time adjustment operation is performed according to the calculation result by controlling the division circuit 114 and the driving circuit 116.

The time adjustment operation in the mobile communication terminal in accordance with another embodiment of the present invention can be achieved according to the operations of FIG. 4.

Meanwhile, as shown in FIGs. 3 and 4, either or both of the time adjustment operations in accordance with the first and second embodiments of the present invention can be properly provided. In other words, it is possible to provide submenus (e.g., a first adjustment menu and a second adjustment menu) in a time adjustment selection menu and implement the operations of FIGs. 3 and 4 according to the selection of respective submenus. In that case, the user can select the predetermined menu of performing the operation of FIG. 3 in the time adjustment for correcting an incorrect several minutes or several tens of minutes. In addition, in case of adjusting time of several hours, the user can select the predetermined menu of performing the operation of FIG. 4.

As described above, in the terminal having an analog watch in accordance with the present invention, it is unnecessary to include a stem structure for adjusting time and it is possible to manipulate the time adjustment. Therefore, an outer appearance is elegant and the time adjustment is convenient.

It will be apparent to those skilled in the art that various modifications and variations can be made in the present invention. Thus, it is intended that the present invention covers the modifications and variations of this invention provided they come within the scope of the appended claims and their equivalents.

## Claims

1. An apparatus for adjusting the time of analog watch in a terminal having the analog watch, comprising:
(a) an analog watch unit, comprising:
an oscillation circuit for generating a standard signal with a predetermined frequency;
a division circuit for dividing the standard signal by a predetermined division ratio according to a control signal and generating a divided signal;
a driving circuit for generating a driving signal according to the divided signal; and
a driving unit driven by the driving signal, for moving the elements of the analog watch; and
(b) a control unit for providing the control signal to the division circuit of the analog watch unit when a predetermined time adjustment manipulation is inputted.

2. The apparatus as claimed in claim 1, wherein the division circuit divides the standard signal into one of a predetermined frequency of a general time indication mode and a predetermined frequency of a time adjustment mode according to the control signal.

3. The apparatus as claimed in claim 1 or 2, further comprising a time adjustment key for inputting the time adjustment manipulation.

4. The apparatus as claimed in claim 2 further comprising a time adjustment key for inputting the time adjustment manipulation.

5. The apparatus as claimed in one of claims 1 to 4, wherein the control unit checks a corresponding input state when the time adjustment manipulation is inputted, and controls an operational state of the driving circuit according to the checked input state.

6. The apparatus as claimed in one of claims 1 to 5, wherein the driving unit is a step motor.

7. The apparatus as claimed in claim 2 wherein the control unit checks a corresponding input state when the time adjustment manipulation is inputted, and controls an operational state of the driving circuit according to the checked input state.

8. An apparatus for adjusting the time of analog watch in a terminal having the analog watch, comprising:
(a) a time adjustment driving signal generation unit comprising:
a second oscillation circuit for generating a second standard signal with a predetermined frequency;
a second division circuit for dividing the second standard signal and generating a second divided signal; and
a second driving circuit for generating a second driving signal according to the second divided signal;
(b) an analog watch unit, comprising:
a first oscillation circuit for generating a first standard signal with a predetermined frequency;
a first division circuit for dividing the first standard signal and generating a first divided signal;
a first driving circuit for generating a first driving signal according to the first divided signal;
a switch for selectively outputting the first driving signal or the second driving signal according to a switching control signal; and
a driving unit driven by an output signal of the switch, for moving the elements of the analog watch; and
(c) a control unit for operating the time adjustment driving signal generation unit and outputting the switching control signal to the switch, when a predetermined time adjustment manipulation is inputted.

9. The apparatus as claimed in claim 8, wherein the control unit further comprises a time adjustment key for inputting the time adjustment manipulation.

10. The apparatus as claimed in claim 8 or 9, wherein the driving unit is a step motor.

11. A method for adjusting the time of analog watch in a terminal having the analog watch, comprising the steps of:
checking an input state of a predetermined time adjustment key in a time adjustment mode; and
moving the hands of the analog watch faster than in a general time indication according to the input state of the time adjustment key.

12. The method as claimed in claim 11, wherein the input state is at least one of the number of times the time adjustment key is pressed and the duration of the press, and wherein hands of the analog watch are moved according to one of a predetermined unit and continuously according to the input state.

13. A method for adjusting the time of analog watch in a terminal having the analog watch, comprising the steps of:
inputting a current time and a desired time in a time adjustment mode;
calculating a difference between the current time and the desired time; and
moving hands of the analog watch faster than in a general time mode to adjust the time corresponding to the calculated difference.

14. The method as claimed in claim 13, further comprising the step of generating clock pulses required to adjust the time based on the calculated difference.

15. The method as claimed in claim 13 or 14, further comprising the step of controlling a clock frequency for adjusting a moving speed of the hands of the analog watch based on the calculated difference.
